# EUROPÄISCHE PATENTSCHRIFT

(11) **EP 3 878 332 B1**
(45) Veröffentlichungstag und Bekanntmachung des Hinweises auf die Patenterteilung: **19.10.2022**
(21) Anmeldenummer: 21158767.0
(22) Anmeldetag: 23.02.2021
(51) Int. Cl.: A47L 5/38

(54) **ZENTRALSAUGANLAGE UND VERFAHREN ZUM BETRIEB EINER ZENTRALSAUGANLAGE**
CENTRAL SUCTION SYSTEM AND METHOD FOR OPERATING A CENTRAL SUCTION SYSTEM
SYSTÈME D'ASPIRATION CENTRALE ET PROCÉDÉ DE FONCTIONNEMENT D'UN SYSTÈME D'ASPIRATION CENTRALE

(30) Priorität: 24.02.2020 DE 102020104812
(43) Veröffentlichungstag der Anmeldung: 15.09.2021
(73) Patentinhaber: Robert Thomas Metall- und Elektrowerke GmbH & Co. KG, 57290 Neunkirchen (DE)
(72) Erfinder: LICHTENTHÄLER, Dominik, 57290 Neunkirchen (DE); KRUMM, Henner, 57072 Siegen (DE); HEIRMAN, Frank, 57290 Neunkirchen (DE)
(74) Vertreter: advotec.

(56) Entgegenhaltungen:
- KR-Y1- 200 471 735
- US-A- 6 012 199
- US-A1- 2016 367 095

## Beschreibung

Die Erfindung betrifft eine Zentralsauganlage nach dem Oberbegriff des Anspruchs 1. Weiter betrifft die Erfindung ein Verfahren zum Betrieb einer Zentralsauganlage.

Zentralsauganlagen der gattungsgemäßen Art sind aus dem Stand der Technik bekannt und finden breite Anwendung. Grundgedanke der Zentralsauganlage ist es, dass eine zentrale Saugeinheit in einem Gebäude, beispielsweise im Kellergeschoss platziert wird, wobei zugleich in den einzelnen zu reinigenden Räumen jeweils Zapfstellen vorgesehen sind, an denen Saugluft mit einem Reinigungsgerät, beispielsweise einer Bodensaugdüse mit zugeordnetem Schlauchanschluss angeschlossen werden kann. Die zentrale Saugeinheit kann auch mehrere Aggregate bzw. Staubauffangbehälter umfassen. Die Zapfstellen werden mit der zentralen Saugeinheit über Saugleitungen verbunden, so dass die zentral durch die zentrale Saugeinheit geförderte Saugluft ausgehend von den jeweils geöffneten Zapfstellen durch die Saugleitungen abgesaugt werden kann. Vorteil ist es dabei, dass das in den zu reinigenden Räumen verwendete Reinigungsgerät keinen eigenen Antrieb zum Ansaugen der Saugluft und keine eigene Filtereinrichtung zum Abfiltern des abgesaugten Staubs benötigt. Diese Funktionalitäten werden vielmehr in der zentralen Saugeinheit realisiert, so dass sich entsprechende Kostenvorteile ergeben. Darüber hinaus kommt es zu vergleichsweise weniger Staubaufwirbelung, sowie Geruchs- und Geräuschbelästigungen. Auch zu verwendende Reinigungsgeräte können außerdem dadurch erheblich leichter und einfacher ausgebildet sein. Das Dokument US 2016 367 095 offenbart eine Zentralsauganlage gemäß dem Oberbegriff des Anspruchs 1 und ein Verfahren gemäß dem Oberbegriff des Anspruchs 13.

Bei den bekannten Zentralsauganlagen ist an den einzelnen Zapfstellen jeweils ein Absperrorgan vorgesehen, wobei die Entnahme von Saugluft an der Zapfstelle durch Betätigung des Absperrorgans freigegeben oder abgeschalten werden kann. Das Absperrorgan kann beispielsweise in der Art einer Verschlussklappe in der Zapfstelle ausgebildet sein, die durch Einstecken des Schlauchs des jeweils verwendeten Reinigungsgeräts geöffnet wird. Im Ergebnis strömt dann die Saugluft nach Einstecken des Schlauchs in die Zapfstelle durch das Reinigungsgerät und ermöglicht eine Reinigung des entsprechenden Raums. Nach Abschluss der Reinigung kann dann der Schlauch wieder aus der Zapfstelle herausgezogen und dadurch die Zapfstelle verschlossen werden, so dass die Saugluft nicht unkontrolliert in die Zapfstelle eingesogen wird.

Die bekannten Zentralstaubanlagen haben den Nachteil, dass bei gleichzeitiger Nutzung in mehreren Räumen, das heißt wenn mehrere Reinigungsgeräte an verschiedenen Zapfstellen gleichzeitig eingesteckt sind, ein sehr hoher Spitzenbedarf bei der erforderlichen Saugleistung vorzusehen ist. Wird eine Zentralsauganlage beispielsweise in einer Wohnanlage mit zwölf Wohnungen eingebaut, so muss die Saugleistung der Zentralsauganlage dahingehend ausgelegt werden, dass selbst bei gleichzeitiger Nutzung eines Reinigungsgeräts in allen zwölf Wohnungen für jede Wohnung ein erforderliches Mindestmaß an Saugleistung zur Verfügung steht. Bei den bekannten Zentralsauganlagen werden deshalb zum Antrieb der zentralen Saugeinheit Antriebsvorrichtungen mit sehr hoher Leistung verwendet, die einen hohen Energieverbrauch und/oder Effizienzverluste und damit entsprechend hohe Kosten verursachen.

Aufgabe der vorliegenden Erfindung ist es deshalb eine Zentralsauganlage vorzuschlagen, mit der ein Energieverbrauch beim Antrieb der zentralen Saugeinheit auch bei Versorgung von einer Vielzahl von Zapfstellen mit Saugluft reduziert werden kann. Das erfindungsgemäße Verfahren hat die Aufgabe den Einsatz der Zentralsauganlage im Hinblick auf die Reduktion der erforderlichen Spitzenlast bei der Versorgung von Zentralsauganlagen mit einer Vielzahl von Zapfstellen zu optimieren.

Diese Aufgabe wird durch eine Zentralsauganlage bzw. ein Verfahren zum Betrieb einer Zentralsauganlage nach der Lehre der unabhängigen Hauptansprüche gelöst.

Vorteilhafte Ausführungsformen der Erfindung sind Gegenstand der Unteransprüche.

Die erfindungsgemäße Zentralstaubanlage wird dadurch charakterisiert, dass die den Zapfstellen jeweils zugeordneten Absperrorgane durch Ansteuerung einer Antriebseinrichtung zwischen einer Sperrstellung und einer Öffnungsstellung verstellbar sind. Befindet sich das Absperrorgan in der Sperrstellung ist es geschlossen, so dass Saugluft an der entsprechenden Zapfstelle nicht entnommen werden kann. Befindet sich das Absperrorgan in der Öffnungsstellung ist es geöffnet und Saugluft kann mit dem Reinigungsgerät an der Zapfstelle entnommen werden.

Erfindungsgemäß ist es vorgesehen, dass die Antriebseinrichtung zum Öffnen und Schließen des Absperrorgans mit einer Bedieneinrichtung durch einen Benutzer fernsteuerbar ist. Dies bedeutet mit anderen Worten, dass das Absperrorgan nicht mehr unmittelbar durch den Benutzer betätigt wird, sondern stattdessen die Betätigung durch Ansteuerung der Antriebseinrichtung des Absperrorgans mittels der Bedieneinrichtung erfolgt. Erfindungsgemäß wird es dadurch möglich, das Absperrorgan als fernsteuerbares Stellglied in der Zentralsauganlage zu verwenden und dadurch im Hinblick auf die erforderliche Spitzenlast der Zentralsauganlage unerwünschte Mehrfachnutzungen durch die gleichzeitige Entnahme von Saugluft an zu vielen Zapfstellen gleichzeitig auszuschließen.

In welcher Weise die Bedienbefehle des Benutzers von der Bedieneinrichtung an die Antriebseinrichtung des Absperrorgans übermittelt werden, ist grundsätzlich beliebig. Besonders komfortabel und einfach gelingt dies, wenn die Bedieneinrichtung eine drahtlose Kommunikationsschnittstelle zur drahtlosen Ansteuerung der Antriebseinrichtung aufweist. Beispielsweise können Bedienbefehle mittels einer Fernbedienung und/oder durch Sprachbefehle übermittelt werden. Dadurch wird es insbesondere vermieden, dass eine Vielzahl von Kommunikationskabeln im Gebäude verlegt werden müssen.

Um dem Benutzer eine besonders komfortable Benutzung im Hinblick auf das Ein- und Ausschalten einer Zapfstelle zu ermöglichen, ist es vorteilhaft, wenn die Bedieneinrichtung zur Ansteuerung der Antriebeinrichtung des Absperrorgans in das an die Zapfstelle anschließbare Reinigungsgerät eingebaut ist. Dies kann insbesondere durch die Verwendung einer drahtlosen Kommunikationsschnittstelle stark vereinfacht werden. Will der Benutzer nunmehr einen Raum reinigen, so kann er nach Anschluss des Schlauchs an die Zapfstelle die Saugluft durch Betätigung der am Reinigungsgerät selbst vorgesehenen Bedieneinrichtung einschalten. Zum Abschluss der Reinigungsarbeiten schaltet er das Absperrorgan durch entsprechende Eingabe eines Bedienbefehls an der Bedieneinrichtung in die Sperrstellung, so dass anschließend der Schlauch des Reinigungsgeräts abgenommen werden kann. Im Hinblick auf die Vermeidung einer unerwünschten Spitzenlast beim Betrieb der Zentralsauganlage durch die gleichzeitige Entnahme von Saugluft an zu vielen Zapfstellen ist es weiterhin besonders vorteilhaft, wenn das Absperrorgan ein Steuerungsmodul umfasst, das mit der Bedieneinrichtung zur Fernsteuerung des Absperrorgan ansteuerbar ist und zugleich mit der Hauptsteuerung der Zentralstaubanlage angesteuert werden kann. Im Ergebnis erhält also das Absperrorgan dann mittels des Steuerungsmoduls gleichzeitig Bedienbefehle aus der Bedieneinrichtung und aus der Hauptsteuerung der Zentralsauganlage.

Die Art und Weise der Datenkommunikation zwischen dem Steuerungsmodul vom Absperrorgan und der Hauptsteuerung der Zentralsauganlage ist grundsätzlich beliebig. Zur Vermeidung der Notwendigkeit zur Verlegung einer Vielzahl von Kommunikationsleitungen ist es besonders vorteilhaft, wenn die Daten über ein Bussystem ausgetauscht werden. Dadurch reicht die Verlegung einer gemeinsamen Datenbusleitung zwischen allen Steuerungsmodulen an den verschiedenen Zapfstellen und der Hauptsteuerung der Zentralsauganlage aus.

Im Hinblick auf die effiziente Nutzung der von der zentralen Saugeinheit zur Verfügung gestellten Saugleistung ist es weiterhin vorteilhaft, wenn die zentrale Saugeinheit durch Ansteuerung der Steuerungsmodule im Absperrorgan ein- und ausschaltbar und/oder, dass die Saugleistung der zentralen Saugeinheit durch Ansteuerung des Steuermoduls im Absperrorgan veränderbar ist. Dadurch gelingt es, die von der zentralen Saugeinheit zur Verfügung gestellte Saugleistung bedarfsgerecht auf die Anzahl der gleichzeitig geöffneten Zapfstellen abzustimmen. Außerdem kann die zentrale Saugeinheit in den Fällen, dass keiner Zapfstelle Saugluft entnommen wird, in einen Ruhezustand versetzt werden.

Gemäß einer bevorzugten Ausführungsform ist es vorgesehen, dass die Zentralsauganlage ein Zeitglied umfasst, mit dem die Nutzungsdauer bei der Entnahme von Saugluft an der Zapfstelle erfassbar ist, und/oder mit dem das Absperrorgan nach Ablauf einer vorgegebenen maximalen Nutzungsdauer abgeschaltet werden kann. Im Ergebnis kann somit durch Einsatz des Zeitglieds die jeweilige Nutzungsdauer bei der Entnahme von Saugluft an den einzelnen Zapfstellen registriert und zur Abrechnung gegenüber den Benutzern eingesetzt werden. Die Überwachung der maximalen Nutzungsdauer ermöglicht es, eine unerwünschte Dauernutzung nach Überschreiten einer vorgegebenen Höchstnutzungsdauer dadurch auszuschließen, dass bei Überschreiten der Höchstnutzungsdauer das Absperrorgan automatisch geschlossen wird. Um die Zentralsauganlage in ein Smart-Home-Netzwerk einbinden zu können, sollte die Zentralsauganlagen weiterhin eine entsprechende Datenschnittstelle aufweisen.

Um im Falle eines Brands die Zapfstellen automatisch schließen zu können, ist es vorteilhaft, wenn an den Absperrorganen jeweils eine Rückholeinrichtung, beispielsweise eine Rückholfeder, vorgesehen ist, die das Absperrorgan bei funktionsloser Antriebseinrichtung automatisch schließt. Im Falle eines Brands und entsprechendem Stromausfall wird dadurch gewährleistet, dass die Absperrorgane automatisch schließen und dadurch die Saugleitungen verschlossen werden.

Um einen Funktionsausfall der Zentralsauganlage im Falle der Störung der Antriebseinheit in der zentralen Saugeinheit auszuschließen, ist es vorteilhaft, wenn die zentrale Saugeinheit zumindest zwei redundante Saugmodule umfasst. Fällt eines dieser Saugmodule aus, kann die erforderliche Saugleistung zumindest im beschränkten Umfang durch das verbleibende zweite Saugmodul gewährleistet werden.

Die Zentralsauganlage kann eine Schlauchaufrollvorrichtung umfassen, mittels der ein Schlauch des Reinigungsgerätes auf einer Haspel auf- und abrollbar ist.

Das erfindungsgemäße Verfahren zum Betrieb einer Zentralsauganlage wird dadurch charakterisiert, dass die Anzahl der gleichzeitig geöffneten Absperrorgane überwacht wird. Wird nun die vorgegebene Maximalanzahl von gleichzeitig geöffneten Absperrorganen überschritten, so wird dadurch die Öffnung weiterer Absperrorgane ausgeschlossen. Im Ergebnis wird durch das erfindungsgemäße Verfahren erreicht, dass die Anzahl der gleichzeitig geöffneten Absperrorgane auf eine vorgegebene Maximalanzahl begrenzt wird. Die dem Betrieb der Zentralsauganlage zur Verfügung gestellte Spitzenlast zur Erzeugung der Saugluft kann durch diese Begrenzung der Maximalanzahl von gleichzeitig geöffneten Absperrorganen und die dadurch erreichte Begrenzung der gleichzeitig genutzten Zapfstellen signifikant reduziert werden. Umfasst die Zentralsauganlage beispielsweise zwölf Zapfstellen, an denen Saugluft entnommen werden kann, so würde bei einer konventionellen Zentralsauganlage eine Auslegung der maximal erforderlichen Spitzenlast der zentralen Saugeinheit eine Auslegung auf die gleichzeitige Nutzung von Reinigungsgeräten an zwölf Zapfstellen erforderlich. Mittels des erfindungsgemäßen Verfahrens kann die Maximalanzahl von gleichzeitig geöffneten Absperrorganen beispielweise auf vier oder fünf begrenzt werden, so dass die erforderliche Spitzenlast der zentralen Saugeinheit entsprechend sinkt. Für den praktischen Gebrauch der Zentralsauganlage bedeutet diese Begrenzung der Maximalanzahl von gleichzeitig geöffneten Absperrorganen in aller Regel keine maßgebliche Einschränkung, da das gleichzeitige Öffnen einer größeren Anzahl von Absperrorganen in nur sehr seltenen Ausnahmefällen vorkommt. Sind in der Zentralsauganlage alle Zapfstellen geschlossen, so wird keine Saugluft entnommen und der Antrieb der zentralen Saugeinheit ist nicht erforderlich. Um einen unnützen Antrieb der zentralen Saugeinheit in diesen Fällen zu vermeiden, ist es gemäß einer bevorzugten Verfahrensvariante vorgesehen, dass die zentrale Saugeinheit erst beim Öffnen des ersten Absperrorgans eingeschaltet und beim Schließen des letzten Absperrorgans wieder abgeschaltet wird. Dies bedeutet mit anderen Worten, dass die zentrale Saugeinheit nur dann Saugluft zur Verfügung stellt, wenn zumindest ein Absperrorgan geöffnet wird. Sind dagegen alle Absperrorgane geschlossen, wird die zentrale Saugeinheit in einen Ruhezustand versetzt, bei dem im Wesentlichen keine Betriebsenergie verbraucht wird.

Durch Einsatz des erfindungsgemäßen Verfahrens wird die Anzahl der gleichzeitig geöffneten Absperrorgane auf eine vorgegebene Maximalanzahl begrenzt. Wird diese Maximalanzahl unterschritten kann dann das Absperrorgan an einer anderen Zapfstelle geöffnet werden. Bei der Reinigung eines Raums ergibt sich dadurch das Problem, dass beispielsweise das Reinigungsgerät in einem Raum in einer kurzen Reinigungspause abgeschaltet wird. Wird nun ein Absperrorgan an einer anderen Zapfstelle geöffnet, wäre das erneute Öffnen des Absperrorgans an der ersten Zapfstelle gesperrt und die Reinigungsarbeiten könnten in diesem Raum nicht fortgesetzt werden. Zur Vermeidung dieses Problems ist es deshalb gemäß einer bevorzugten Verfahrensvariante vorgesehen, dass bei Unterschreiten der vorgegebenen Maximalzahl von gleichzeitig geöffneten Absperrorgangen durch Schließen eines Absperrorgans in einer Reinigungspause das Öffnen eines anderen Absperrorgans bis zum Ablauf einer vorgegebenen Latenzzeit ausgeschlossen bleibt. Während dieser Latenzzeit hat der Nutzer während einer Reinigungspause die Möglichkeit während dieser Zeit eine erneute Öffnung des Absperrorgans an seiner Zapfstelle anzufordern. Erst wenn die Latenzzeit abgelaufen ist, kann dann ein anderer Benutzer an einer anderen Zapfstelle die Öffnung des jeweils zugeordneten Absperrorgans anfordern. Um den Benutzer über die Möglichkeit zur erneuten Öffnung seines Absperrorgans zu informieren, ist es vorteilhaft, wenn die Latenzzeit mit einer Signalisierungseinrichtung, Beispielsweise an einem Bildschirm angezeigt wird, um dem Benutzer über die Möglichkeit zum erneuten Öffnen des zuvor geschlossenen Absperrorgans zu informieren. Insbesondere kann der Benutzer dadurch auch darüber informiert werden, zu welchem Zeitpunkt die Latenzzeit abläuft, so dass er seine Reinigungspause vor Ablauf der Latenzzeit unterbricht und das Absperrorgan durch Eingabe eines entsprechenden Bedienbefehls wieder öffnet. Optional kann die Latenzzeit auch dynamisch geändert werden, beispielsweise situationsabhängig nach der Anzahl der aktiven Benutzer und/oder nicht bedienbaren Sauganforderungen.

Um eine nutzungsgerechte Abrechnung der Kosten für den Betrieb der Zentralsauganlage zu ermöglichen, ist es besonders vorteilhaft, wenn nach Öffnen eines Absperrorgans die Nutzungsdauer bei der Entnahme von Saugluft an der zugeordneten Zapfstelle erfasst wird. Diese Nutzungsdauer kann dann zur Grundlage einer entsprechenden Nutzungsgebühr für die Nutzung der Zentralsauganlage verwendet werden.

Wird der Bediener bei Durchführung von Reinigungsarbeiten unterbrochen, so kann es vorkommen, dass das Absperrorgan geöffnet bleibt obwohl keine Reinigungsarbeiten mehr ausgeführt werden. Dadurch würde die Nutzung von Saugluft an anderen Zapfstellen möglicherweise unmöglich gemacht. Um dies zu verhindern, kann bei Überschreiten einer vorgegebenen maximalen Nutzungsdauer das Absperrorgan automatisch geschlossen werden. Beispielsweise kann das Absperrorgan nach Ablauf einer maximalen Nutzungsdauer von beispielsweise 30 Minuten automatisch geschlossen werden, da diese Zeit zur Reinigung eines Raums üblicherweise problemlos ausreicht.

Im Hinblick auf die effiziente Nutzung der Antriebsleistung zum Antrieb der zentralen Saugeinheit ist es vorteilhaft, wenn die Saugleistung der zentralen Saugeinheit in Abhängigkeit von der Anzahl der gleichzeitig geöffneten Absperrorgane verändert wird. Sind beispielsweise lediglich zwei Zapfstellen geöffnet, wird eine geringere Saugleistung benötigt, als wenn Saugluft gleichzeitig an vier, fünf oder sechs Zapfstellen entnommen wird.

Die Saugleitungen können mit einer oder mehreren Steigleitungen mit Abzweigungen innerhalb einer oder mehrerer Etagen eines Gebäudes oder auch mit einer oder mehreren Ringleitungen mit Abzweigungen ausgebildet sein.

Eine Ausführungsform der Erfindung ist den Zeichnungen schematisiert dargestellt und wird nachfolgend beispielhaft erläutert.

Es zeigen:
- **Fig. 1**: das Aufbauschema einer erfindungsgemäßen Zentralsauganlage;
- **Fig. 2**: das Absperrorgan an einer Zapfstelle der Zentralsauganlage gemäß Fig. 1 in perspektivischer seitlicher Ansicht.

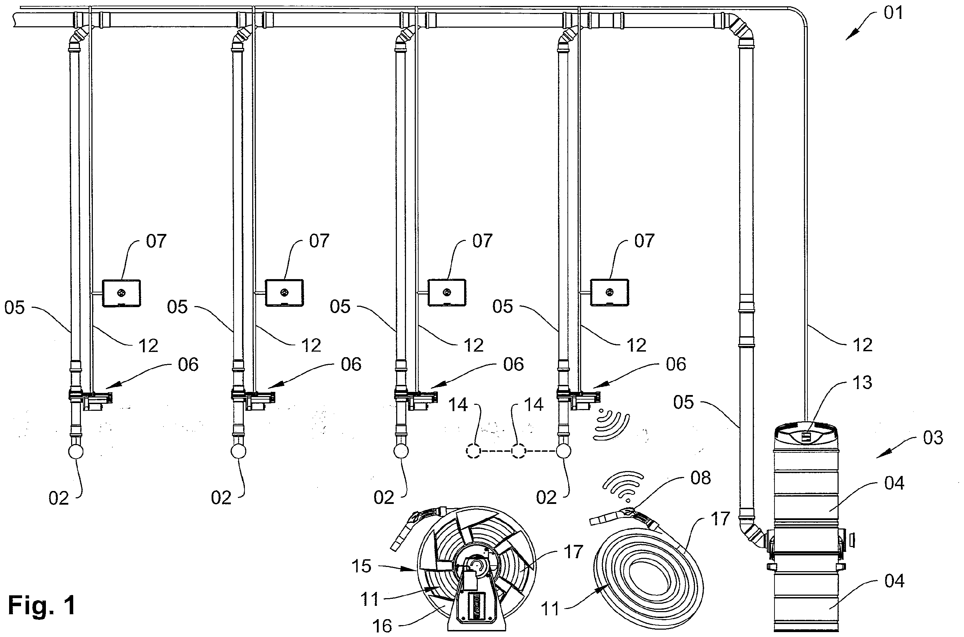

**Fig. 1** zeigt das Aufbauschema einer Zentralsauganlage 01 mit mehreren Zapfstellen 02, die beispielsweise auf unterschiedlichen Wohnetage liegen können. In Fig. 1 sind beispielhaft vier Zapfstellen 02 dargestellt, aber die Zentralsauganlage 01 kann selbstverständlich auf eine Vielzahl von weiteren Zapfstellen erweitert werden. Eine zentrale Saugeinheit 03 mit zwei redundant verwendbaren Saugmodulen 04 ist mit jeder Zapfstelle 02 über Saugleitungen 05 verbunden, um durch Erzeugung eines entsprechenden Unterdrucks in der zentralen Saugeinheit 03 Saugluft an den Zapfstellen 02 in die Saugleitungen 05 einziehen zu können.

An jeder der Zapfstellen 02 kann ein Reinigungsgerät 11, beispielsweise eine Saugdüse mit entsprechendem Anschlussschlauch angeschlossen werden. Jeder Zapfstelle 02 ist ein Absperrorgan 06 vorgeordnet, wobei die Entnahme von Saugluft an einer Zapfstelle 02 durch Betätigung des Absperrorgans freigegeben oder abgeschaltet werden kann. Wie hier beispielhaft dargestellt, kann ein Schlauch 17 des Reinigungsgeräts 11 auch optional auf einer Haspel 16 einer Schlauchaufrollvorrichtung 15 aufund abrollbar angeordnet sein.

Über eine Datenbusleitung 12 werden die Steuerungsmodule in den Absperrorganen 06 mit Bedieneinrichtungen 07 und der Hauptsteuerung 13 der Zentralsauganlage 01 verbunden. Die Bedieneinrichtungen 07 sind in der Art von Touchscreens ausgebildet, an denen der Benutzer seine Bedienbefehle, beispielsweise manuell oder als Sprachbefehle, eingeben kann. Die in den Absperrorganen 06 vorgesehenen Steuerungsmodule weisen außerdem eine drahtlose Kommunikationsschnittstelle auf, um Bedienbefehle per Funk von einer in das Reinigungsgerät 11 eingebauten Bedieneinrichtung 08 annehmen zu können.

Will ein Benutzer in einem Raum Reinigungsarbeiten unter Verwendung des Reinigungsgeräts 11 durchführen, wird zunächst der Schlauch des Reinigungsgeräts 11 an die Zapfstelle 02 angeschlossen, und anschließend durch Eingabe eines Bedienbefehls an den Bedieneinrichtungen 07 bzw. 08 das der jeweiligen Zapfstelle 02 zugeordnete Absperrorgan 06 geöffnet. Durch das Öffnen des Absperrorgans 06 wird die Luft durch das Reinigungsgerät 11 in die Zapfstelle 02 von dort durch die Saugleitungen 05 in die zentrale Saugeinheit 03 eingesogen. Wie hier beispielhaft dargestellt kann die Zapfstelle 02 auch eine Mehrzahl von parallel geschalteten Anschlüssen 14 umfassen, die dem Absperrorgan 06 der Zapfstelle 02 nachgeschaltet sind und einen Anschluss eines Reinigungsgeräts 11 ermöglichen.

Durch die Bedieneinheit 07 kann dem Benutzer der Status der Zentralsauganlage für seinen Nutzungsbereich angezeigt werden. Die Anzeige umfasst hier beispielhaft vier Statusmeldungen, nämlich, die Statusmeldung "BEREIT", die Statusmeldung "AKTIV", die Statusmeldung "BELEGT" und die Statusmeldung "STÖRUNG/SERVICE". Weitere Statusmeldungen sind möglich. Außerdem können an der Bedieneinrichtung 07 weitere Parameter, beispielsweise die bisher benutzten Betriebsstunden bzw. die Betriebsstunden des letzten Monats oder der letzten Woche oder Ähnliches angezeigt werden.

Die in Fig. 1 schematisch dargestellte Zentralsauganlage 01 zeichnet sich dadurch aus, dass die Anzahl der gleichzeitig geöffneten Absperrorgane überwacht und auf eine vorgegebene Maximalanzahl begrenzt ist. Bei der in Fig. 1 dargestellten Zentralsauganlage ist es in der maximalen Ausbaustufe vorgesehen, dass acht Zapfstellen über die Saugleitungen 05 an die zentrale Saugeinheit 03 angeschlossen werden. Um die erforderliche Spitzenlast der zentralen Saugeinheit zu begrenzen ist dabei die Anzahl der gleichzeitig geöffneten Absperrorgane auf drei begrenzt.

Wird davon ausgegangen, dass zunächst alle Absperrorgane 06 geschlossen sind, befindet sich die zentrale Saugeinheit in ihrem Ruhezustand und die Saugmotoren sind abgeschaltet. Wird nun eine Zapfstelle 02 in Betrieb genommen und durch Öffnen des zugeordneten Absperrorgans 06 Saugluft gezapft, so wird die entsprechende Anforderung über die Busleitung 12 an die Hauptsteuerung 13 übermittelt und dort registriert. An der jeweils zugeordneten Bedieneinheit 07 wird dann die Statusanzeige "AKTIV" angezeigt. Alle anderen Bedieneinheiten 07 zeigen die Statusanzeige "BEREIT".

Werden nun zwei weitere Absperrorgane 06 durch Eingabe entsprechender Bedienbefehle geöffnet, so wird dies in der Hauptsteuerung 13 registriert, da nach Öffnen von drei Absperrorganen 06 die Maximalanzahl von gleichzeitig geöffneten Absperrorganen erreicht ist, werden die an den geöffneten Absperrorganen 06 zugeordneten Bedieneinheiten 07 die Statusanzeigen auf "AKTIV" gesetzt, wohingegen die fünf anderen Bedieneinheiten die Statusanzeige "BELEGT" anzeigen. Das Öffnen der Absperrorgane an diesen anderen fünf Zapfstellen 02 ist dadurch gesperrt, um eine unerwünschte Aufteilung der Saugleistung auf mehr als drei Zapfstellen 02 auszuschließen. In einem Zeitglied wird die Zeit seit Öffnen des jeweils zugeordneten Absperrorgans registriert. Nach Ablauf einer maximalen Nutzungsdauer von beispielsweise 15 Minuten wird das Absperrorgan 06 automatisch geschlossen, um ein ungewolltes dauerhaftes Öffnen des Absperrorgans und die entsprechende Sperrung an anderen Absperrorganen zu vermeiden.

Unterbricht ein Verwender die Reinigungsarbeiten an einer der Zapfstellen 02 durch Eingabe eines entsprechenden Bedienbefehls, so wird die Zeit seit Fließen des zugeordneten Absperrorgans 06 im Zeitglied registriert und mit einer Latenzzeit verglichen. Erst nach Ablauf der vorgegebenen Latenzzeit von beispielsweise drei Minuten, kann ein anderes Absperrorgan 06 durch einen anderen Verwender geöffnet werden, falls bereits zwei weitere Verwender aktiv sind. Wenn maximal zwei Verwender aktiv sind wechselt in diesem Fall die Anzeige an der Bedieneinrichtung 07 von der Statusanzeige "BELEGT" auf die Statusanzeige "BEREIT". Während der Latenzzeit soll die Statusanzeige an der entsprechenden Bedieneinrichtung farbig markiert sein und/oder blinken, um den Verwender anzuzeigen, dass er während der Latenzzeit problemlos und unabhängig von anderen Verwendern das Absperrorgan jederzeit wieder öffnen kann.

Während der Latenzzeit muss das zugeordnete Absperrventil geschlossen bleiben. Für den Fall, dass der Benutzer zu diesem Zeitpunkt der einzige aktive Verwender der Zentralsauganlage 01 war, werden auch die Motoren in der zentralen Saugeinheit 03 abgeschaltet. Dies bedeutet im Ergebnis, dass die Saugmotoren immer eingeschaltet bleiben, wenn mindestens ein Absperrorgan 06 geöffnet ist.

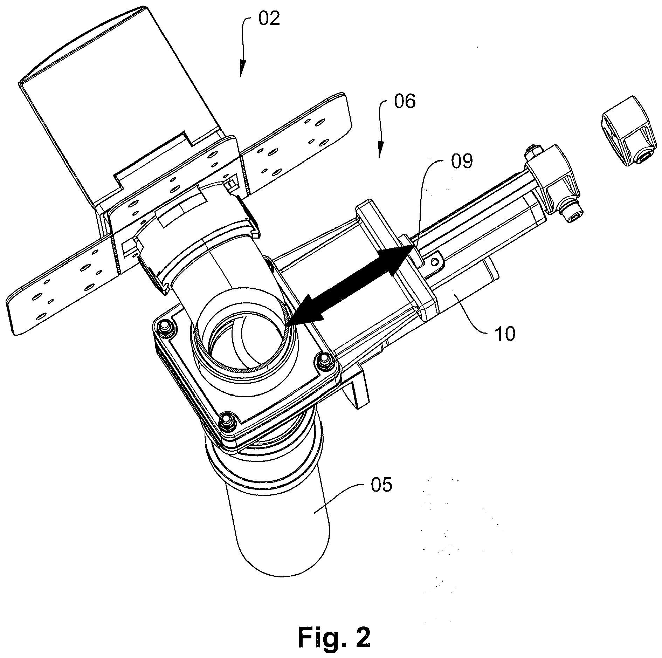

**Fig. 2** zeigt beispielhaft die Anordnung eines Absperrorgans 06 vor einer Zapfstelle 02. Ein Sperrschieber 09 kann durch Antrieb einer Antriebseinrichtung 10, nämlich eines Antriebsmotors linear verstellt und dadurch geöffnet bzw. geschlossen werden.

## Patentansprüche

1. Zentralsauganlage (01) mit zumindest einer zentralen Saugeinheit (03) und mit mehreren Zapfstellen (02), an denen Saugluft mit einem Reinigungsgerät (11) entnommen werden kann, wobei die zentrale Saugeinheit (03) über Saugleitungen (05) mit den Zapfstellen (02) verbunden ist, und wobei den einzelnen Zapfstellen (02) jeweils ein Absperrorgan (06) zugeordnet ist, und wobei die Entnahme von Saugluft an einer Zapfstelle (02) durch Betätigung des Absperrorgans (06) freigegeben und abgeschaltet werden kann,
**dadurch gekennzeichnet,**
**dass** das Absperrorgan (06) durch Ansteuerung einer Antriebseinrichtung (10) zwischen einer Sperrstellung und einer Öffnungsstellung verstellbar ist, und wobei das Absperrorgan (06) in der Sperrstellung geschlossen ist, und wobei das Absperrorgan (06) in der Öffnungsstellung geöffnet ist, und wobei die Antriebseinrichtung zum Öffnen und Schließen des Absperrorgans (06) mit einer Bedieneinrichtung (07, 08) durch einen Benutzer fernsteuerbar ist.

2. Zentralsauganlage nach Anspruch 1,
**dadurch gekennzeichnet,**
**dass** die Bedieneinrichtung (08) eine drahtlose Kommunikationsschnittstelle zur drahtlosen Ansteuerung des Absperrorgans (06) aufweist.

3. Zentralsauganlage nach Anspruch 1 oder 2,
**dadurch gekennzeichnet,**
**dass** die Bedieneinrichtung (08) in ein an einer Zapfstelle (02) anschließbares Reinigungsgerät (11) eingebaut ist.

4. Zentralsauganlage nach einem der Ansprüche 1 bis 3,
**dadurch gekennzeichnet,**
**dass** die Bedieneinrichtung (07) in der Art einer an einem Baukörper befestigbaren Bedieneinheit, insbesondere in der Art eines Touchdisplays, ausgebildet ist.

5. Zentralsauganlage nach einem der Ansprüche 1 bis 4,
**dadurch gekennzeichnet,**
**dass** das Absperrorgan (06) ein Steuerungsmodul umfasst, das mit der Bedieneinrichtung (07, 08) zur Fernsteuerung des Absperrorgans (06) ansteuerbar ist, wobei das Steuerungsmodul zusätzlich mit einer Hauptsteuerung (13) der Zentralsauganlage (01) ansteuerbar ist.

6. Zentralsauganlage nach Anspruch 5,
**dadurch gekennzeichnet,**
**dass** das Steuerungsmodul des Absperrorgans (06) eine Kommunikationsschnittstelle umfasst, mit der das Steuerungsmodul Daten über eine Datenbusleitung (12) mit der Hauptsteuerung (13) der Zentralsauganlage (01) austauschen kann.

7. Zentralsauganlage nach Anspruch 5 oder 6,
**dadurch gekennzeichnet,**
**dass** die zentralen Saugeinheit (03) durch Ansteuerung des Steuerungsmoduls im Absperrorgan (06) ein- und ausschaltbar ist und/oder dass die Saugleistung der zentralen Saugeinheit (03) durch Ansteuerung des Steuerungsmoduls im Absperrorgan (06) veränderbar ist.

8. Zentralsauganlage nach einem der Ansprüche 1 bis 7,
**dadurch gekennzeichnet,**
**dass** die Zentralsauganlage (01) eine Zeitglied umfasst, wobei mit dem Zeitglied die Nutzungsdauer bei der Entnahme von Saugluft an einer Zapfstelle (02) erfassbar ist und/oder wobei mit dem Zeitglied das Absperrorgan (06) nach Ablauf einer vorgegeben maximalen Nutzungsdauer abgeschaltet wird.

9. Zentralsauganlage nach einem der Ansprüche 1 bis 8,
**dadurch gekennzeichnet,**
**dass** die Zentralsauganlage (01) eine Datenschnittstelle zur Einbindung in ein Smart-Home-Netzwerk umfasst.

10. Zentralsauganlage nach einem der Ansprüche 1 bis 9,
**dadurch gekennzeichnet,**
**dass** das Absperrorgan (06) eine Rückholeinrichtung aufweist, wobei die Rückholeinrichtung das Absperrorgan bei funktionsloser Antriebseinrichtung (10) automatisch schließt.

11. Zentralsauganlage nach einem der Ansprüche 1 bis 10,
**dadurch gekennzeichnet,**
**dass** die zentralen Saugeinheit (03) zumindest zwei redundante Saugmodule (04) umfasst.

12. Zentralsauganlage nach einem der Ansprüche 1 bis 11,
**dadurch gekennzeichnet,**
**dass** die Zentralsauganlage (01) eine Schlauchaufrollvorrichtung (15) umfasst, mittels der ein Schlauch (17) des Reinigungsgerätes (11) auf einer Haspel (16) auf- und abrollbar ist.

13. Verfahren zum Betrieb einer Zentralsauganlage (01) mit zumindest einer zentralen Saugeinheit (03) und mit mehreren Zapfstellen (02), an denen Saugluft mit einem Reinigungsgerät (11) entnommen werden kann, wobei die zentrale Saugeinheit (03) über Saugleitungen (05) mit den Zapfstellen (02) verbunden ist, und wobei den einzelnen Zapfstellen (02) jeweils ein Absperrorgan (06) zugeordnet ist, und wobei die Entnahme von Saugluft an einer Zapfstelle (02) durch Betätigung des Absperrorgans (06) freigegeben und abgeschaltet werden kann, und wobei das Absperrorgan (06) durch Ansteuerung einer Antriebseinrichtung (10) zwischen einer Sperrstellung und einer Öffnungsstellung verstellbar ist, und wobei das Absperrorgan (06) in der Sperrstellung geschlossen ist, und wobei das Absperrorgan (06) in der Öffnungsstellung geöffnet ist,
**dadurch gekennzeichnet,**
**dass** die Antriebseinrichtung (10) zum Öffnen und Schließen des Absperrorgans (06) mit einer Bedieneinrichtung (07, 08) durch einen Benutzer fernsteuerbar ist, wobei die Anzahl der gleichzeitig geöffneten Absperrorgane (06) überwacht wird, und wobei bei Überschreiten einer vorgegebenen Maximalanzahl von gleichzeitig geöffneten Absperrorganen (06) eine Öffnung weiterer Absperrorgane (06) ausgeschlossen wird.

14. Verfahren nach Anspruch 13,
**dadurch gekennzeichnet,**
**dass** die zentralen Saugeinheit (03) in der Zentralsauganlage (01) bei Öffnen des ersten Absperrorgans (06) eingeschaltet und bei Schließen des letzten Absperrorgans (06) abgeschaltet wird.

15. Verfahren nach Anspruch 13 oder 14,
**dadurch gekennzeichnet,**
**dass** bei Unterschreiten der vorgegebenen Maximalanzahl von gleichzeitig geöffneten Absperrorganen (06) durch Schließen eines Absperrorgans (06) das Öffnen eines anderen Absperrorgans (06) bis zum Ablauf einer vorgegebenen Latenzzeit ausgeschlossen bleibt.

16. Verfahren nach Anspruch 15,
**dadurch gekennzeichnet,**
**dass** während der Latenzzeit mit einer Signalisierungseinrichtung die Möglichkeit zum erneuten Öffnen des zuvor geschlossenen Absperrorgans (06) angezeigt wird.

17. Verfahren nach einem der Ansprüche 13 bis 16,
**dadurch gekennzeichnet,**
**dass** nach Öffnen eines Absperrorgans (06) die Nutzungsdauer bei der Entnahme von Saugluft an der zugeordneten Zapfstelle (06) erfasst wird.

18. Verfahren nach einem der Ansprüche 13 bis 17,
**dadurch gekennzeichnet,**
**dass** bei Überschreiten einer vorgegebenen maximalen Nutzungsdauer das Absperrorgan (06) automatisch geschlossen wird.

19. Verfahren nach einem der Ansprüche 13 bis 18,
**dadurch gekennzeichnet,**
**dass** die Saugleistung der der zentralen Saugeinheit (03) in Abhängigkeit von der Anzahl der der gleichzeitig geöffneten Absperrorgane (06) verändert wird.

## Claims

1. A central suction system (01) comprising at least one central suction unit (03) and multiple extraction points (02) at which suction air can be extracted using a cleaning device (11), the central suction unit (03) being connected to the extraction points (02) via suction pipes (05), and a shut-off valve (06) being associated with each extraction point (02), and the extraction of suction air at an extraction point (02) being unlocked and locked by operating the shut-off valve (06),
**characterized in that**
the shut-off valve (06) is adjustable between a shut-off position and an open position by actuating a drive member (10), and the shut-off valve (06) being closed when in the shut-off position, and the shut-off valve (06) being open when in the open position, and the drive member being configured for being remote-controlled by a user by means of a control member (07, 08) to open and close the shut-off valve (06).

2. The central suction system according to claim 1,
**characterized in that**
the control member (08) has a wireless communication interface for wirelessly actuating the shut-off valve (06).

3. The central suction system according to claim 1 or 2,
**characterized in that**
the control member (08) is installed in a cleaning device (11) which is connectable to an extraction point (02).

4. The central suction system according to any one of claims 1 to 3,
**characterized in that**
the control member (07) is a control unit, in particular a touch display, which can be attached to a structure.

5. The central suction system according to any one of claims 1 to 4,
**characterized in that**
the shut-off valve (06) comprises a control module configured to be actuated by means of the control member (07, 08) to remotely control the shut-off valve (06), the control module being additionally configured to be actuated by means of a main control (13) of the central suction system (01).

6. The central suction system according to claim 5,
**characterized in that**
the control module of the shut-off valve (06) comprises a communication interface by means of which the control module can exchange data with the main control (13) of the central suction system (01) via a data bus line (12).

7. The central suction system according to claim 5 or 6,
**characterized in that**
the central suction unit (03) is configured to be turned on and off by actuating the control module in the shut-off valve (06), and/or the suction power of the central suction unit (03) is configured to be changed by actuating the control module in the shut-off valve (06).

8. The central suction system according to any one of claims 1 to 7,
**characterized in that**
the central suction system (01) comprises a timing element, the timing element being configured to detect the use time during the extraction of suction air at an extraction point (02), and/or the timing element being configured to shut off the shut-off valve (06) after a predetermined maximum use time has elapsed.

9. The central suction system according to any one of claims 1 to 8,
**characterized in that**
the central suction system (01) comprises a data interface for integration into a smart home network.

10. The central suction system according to any one of claims 1 to 9,
**characterized in that**
the shut-off valve (06) has a return mechanism, the return mechanism automatically closing the shut-off valve when the drive member (10) is inoperable.

11. The central suction system according to any one of claims 1 to 10,
**characterized in that**
the central suction unit (03) comprises at least two redundant suction modules (04).

12. The central suction system according to any one of claims 1 to 11,
**characterized in that**
the central suction system (01) comprises a hose reel device (15) configured to coil and uncoil a hose (17) of the cleaning device (11) on a reel (16).

13. A method for operating a central suction system (01) comprising at least one central suction unit (03) and multiple extraction points (02) at which suction air can be extracted using a cleaning device (11), the central suction unit (03) being connected to the extraction points (02) via suction pipes (05), and a shut-off valve (06) being associated with each extraction point (02), and the extraction of suction air at an extraction point (02) being unlocked and locked by operating the shut-off valve, and the shut-off valve (06) being adjustable between a shut-off position and an open position by actuating a drive member (10), and the shut-off valve (06) being closed when in the shut-off position, and the shut-off valve (06) being open when in the open position,
**characterized in that**
the drive member (10) is controlled remotely by a user by means of a control member (07, 08) to open and close the shut-off valve (06), the number of shut-off valves (06) open at the same time being monitored, and the opening of more shut-off valves (06) being precluded if a predetermined maximum number of shut-off valves (06) open at the same time is exceeded.

14. The method according to claim 13,
**characterized in that**
the central suction unit (03) in the central suction system (01) is turned on when the first shut-off valve (06) is opened and turned off when the last shut-off valve (06) is closed.

15. The method according to claim 13 or 14,
**characterized in that**
if the number of shut-off valves (06) open at the same time drops below the predetermined maximum number because one shut-off valve (06) has been closed, opening another shut-off valve (06) is precluded until a predetermined latency period has elapsed.

16. The method according to claim 15,
**characterized in that**
during the latency period, a signaling device indicates that the previously closed shut-off valve (06) can be opened again.

17. The method according to any one of claims 13 to 16,
**characterized in that**
after opening a shut-off valve, the use time during the extraction of suction air at the associated extraction point (06) is detected.

18. The method according to any one of claims 13 to 17,
**characterized in that**
the shut-off valve (06) is automatically closed if a predetermined maximum use time is exceeded.

19. The method according to any one of claims 13 to 18,
**characterized in that**
the suction power of the central suction unit (03) is changed as a function of the number of shut-off valves (06) open at the same time.

## Revendications

1. Système d'aspiration centralisée (01) comprenant au moins une unité d'aspiration centrale (03) et plusieurs points d'extraction (02) auxquels de l'air d'aspiration peut être extrait par un dispositif de nettoyage (11), l'unité d'aspiration centrale (03) étant liée aux points d'extraction (02) par des conduits d'aspiration (05) et un organe d'arrêt (06) étant associé à chaque point d'extraction (02) et l'extraction de l'air d'aspiration à un point d'extraction (02) étant débloquée et bloquée en actionnant l'organe d'arrêt (06),
**caractérisé en ce que**
l'organe d'arrêt (06) est ajustable entre une position de blocage et une position ouverte en actionnant un élément d'entraînement (10) et l'organe d'arrêt (06) étant fermé dans la position de blocage et l'organe d'arrêt (06) étant ouvert dans la position ouverte et l'élément d'entraînement étant configuré pour être télécommandé par un utilisateur au moyen d'un élément de commande (07, 08) afin d'ouvrir et de fermer l'organe d'arrêt (06).

2. Système d'aspiration centralisée selon la revendication 1,
**caractérisé en ce que**
l'élément de commande (08) a une interface de communication sans fil pour actionner sans fil l'organe d'arrêt (06).

3. Système d'aspiration centralisée selon la revendication 1 ou 2,
**caractérisé en ce que**
l'élément de commande (08) est incorporé dans un dispositif de nettoyage (11) qui peut être connecté à un point d'extraction (02).

4. Système d'aspiration centralisée selon l'une quelconque des revendications 1 à 3,
**caractérisé en ce que**
l'élément de commande (07) est une unité de commande, notamment un écran tactile, qui peut être fixée à une structure.

5. Système d'aspiration centralisée selon l'une quelconque des revendications 1 à 4,
**caractérisé en ce que**
l'organe d'arrêt (06) comprend un module de commande configuré pour être actionné au moyen de l'élément de commande (07, 08) afin de télécommander l'organe d'arrêt (06), le module de commande étant configuré en outre pour être actionné par un contrôleur maître (13) du système d'aspiration centralisée (01).

6. Système d'aspiration centralisée selon la revendication 5,
**caractérisé en ce que**
le module de commande de l'organe d'arrêt (06) comprend une interface de communication au moyen de laquelle le module de commande peut échanger des données avec le contrôleur maître (13) du système d'aspiration centralisée (01) par une ligne bus de données (12).

7. Système d'aspiration centralisée selon la revendication 5 ou 6,
**caractérisé en ce que**
l'unité d'aspiration centrale (03) est configurée pour être activée et désactivée en actionnant le module de commande dans l'organe d'arrêt (06) et/ou la puissance d'aspiration de l'unité d'aspiration centrale (03) peut être changée an actionnant le module de commande dans l'organe d'arrêt (06).

8. Système d'aspiration centralisée selon l'une quelconque des revendications 1 à 7,
**caractérisé en ce que**
le système d'aspiration centralisée (01) comprend un temporisateur, le temporisateur étant configuré pour détecter la durée d'utilisation lors de l'extraction de l'air d'aspiration à un point d'extraction (02) et/ou le temporisateur étant configuré pour désactiver l'organe d'arrêt (06) après l'écoulement d'une durée d'utilisation maximale prédéterminée.

9. Système d'aspiration centralisée selon l'une quelconque des revendications 1 à 8,
**caractérisé en ce que**
le système d'aspiration centralisée (01) comprend une interface de données pour l'intégration dans un réseau de maison intelligente.

10. Système d'aspiration centralisée selon l'une quelconque des revendications 1 à 9,
**caractérisé en ce que**
l'organe d'arrêt (06) a un mécanisme de rappel, le mécanisme de rappel fermant automatiquement l'organe d'arrêt quand l'élément d'entraînement (10) est sans fonction.

11. Système d'aspiration centralisée selon l'une quelconque des revendications 1 à 10,
**caractérisé en ce que**
l'unité d'aspiration centrale (03) comprend au moins deux modules d'aspiration (04) redondants.

12. Système d'aspiration centralisée selon l'une quelconque des revendications 1 à 11,
**caractérisé en ce que**
le système d'aspiration centralisée (01) comprend un dispositif enrouleur de tuyau (15) configuré pour enrouler et dérouler un tuyau (17) du dispositif de nettoyage (11) sur un dévidoir (16).

13. Procédé de fonctionnement d'un système d'aspiration centralisée (01) comprenant au moins une unité d'aspiration centrale (03) et plusieurs points d'extraction (02) auxquels de l'air d'aspiration peut être extrait par un dispositif de nettoyage (11), l'unité d'aspiration centrale (03) étant liée aux points d'extraction (02) par des conduits d'aspiration (05) et un organe d'arrêt (06) étant associé à chaque point d'extraction (02) et l'extraction de l'air d'aspiration à un point d'extraction (02) étant débloqué et bloqué en actionnant l'organe d'arrêt et l'organe d'arrêt (06) étant ajusté entre une position de blocage et une position ouverte en actionnant un élément d'entraînement (10) et l'organe d'arrêt (06) étant fermé dans la position de blocage et l'organe d'arrêt (06) étant ouvert dans la position ouverte,
**caractérisé en ce que**
l'élément d'entraînement (10) est télécommandé par un utilisateur au moyen d'un élément de commande (07, 08) afin d'ouvrir et de fermer l'organe d'arrêt (06), la nombre d'organes d'arrêt (06) ouverts en même temps étant surveillé et l'ouverture de plus d'organes d'arrêt (06) étant exclue si un nombre maximal prédéterminé d'organes d'arrêt (06) ouverts en même temps est dépassé.

14. Procédé selon la revendication 13,
**caractérisé en ce que**
l'unité d'aspiration centrale (03) dans le système d'aspiration centralisée (01) est activée quand le premier organe d'arrêt (06) est ouvert et elle est désactivée quand le dernier organe d'arrêt (06) est fermé.

15. Procédé selon la revendication 13 ou 14,
**caractérisé en ce que**
si le nombre d'organes d'arrêt (06) ouverts en même temps descende au-dessous du nombre maximal prédéterminé parce qu'un organe d'arrêt (06) a été fermé, l'ouverture d'un autre organe d'arrêt (06) est exclue jusqu'à ce qu'un temps de latence se soit écoulé.

16. Procédé selon la revendication 15,
**caractérisé en ce que**
pendant le temps de latence, un dispositif de signalement indique que l'organe d'arrêt (06) fermé précédemment peut être ouvert à nouveau.

17. Procédé selon l'une quelconque des revendications 13 à 16,
**caractérisé en ce**
**qu'**après l'ouverture d'un organe d'arrêt, la durée d'utilisation lors de l'extraction de l'air d'aspiration au point d'extraction (06) associé est détectée.

18. Procédé selon l'une quelconque des revendications 13 à 17,
**caractérisé en ce que**
l'organe d'arrêt (06) est fermé automatiquement si une durée d'utilisation maximale prédéterminée est dépassée.

19. Procédé selon l'une quelconque des revendications 13 à 18,
**caractérisé en ce que**
la puissance d'aspiration de l'unité d'aspiration centrale (03) est changée en fonction du nombre d'organes d'arrêt (06) ouverts en même temps.
